# EUROPEAN PATENT SPECIFICATION

(11) **EP 2 957 135 B1**
(45) Date of publication and mention of the grant of the patent: **06.11.2019**
(21) Application number: 13704608.2
(22) Date of filing: 15.02.2013
(51) Int. Cl.: H04W 52/02

(54) **METHOD AND NETWORK NODE FOR SETTING A MOBILE COMMUNICATION TERMINAL IN AN IDLE MODE**
VERFAHREN UND NETZWERKKNOTEN ZUR EINSTELLUNG EINES MOBILEN KOMMUNIKATIONSENDGERÄTS IN EINEM RUHEMODUS
PROCÉDÉ ET NOEUD DE RÉSEAU SERVANT AU RÉGLAGE D'UN TERMINAL MOBILE DE COMMUNICATION DANS UN MODE REPOS

(43) Date of publication of application: 23.12.2015
(73) Proprietor: Telefonaktiebolaget LM Ericsson (publ), 164 83 Stockholm (SE)
(72) Inventor: MÜLLER, Walter, S-194 62 Upplands Väsby (SE); NORDSTRAND, Ingrid, S-172 40 Sundbyberg (SE); FADAKI, Mojgan, S-169 74 Solna (SE); JOHANSSON, Stefan, S-582 36 Linköping (SE); OLSSON, Lars-Bertil, S-424 48 Angered (SE); RUNE, Göran, S-582 52 Linköping (SE)
(74) Representative: Zacco Sweden AB
(86) International application number: PCT/EP2013/053062
(87) International publication number: WO 2014/124682

(56) References cited:
- EP-A1- 2 458 922
- US-A1- 2012 051 289

## Description

### TECHNICAL FIELD

The invention relates to a method and a network node for determining when to set a mobile communication terminal in an idle mode.

### BACKGROUND

In cellular communication networks, there are mobile communication terminals in communication with the network. Since the mobile communication terminals are allowed to be mobile, they typically contain their own power supply, such as a battery. Increasing battery life is thus an ever-present challenge for cellular communication systems. On the other hand, speed and responsiveness often require more power usage from the mobile communication terminals, whereby a balance between power usage and responsiveness is in many cases needed.

One way to balance the responsiveness and power usage in the mobile communication terminals is to remove radio access bearers for mobile communication terminals where the user is inactive, as mentioned in 3GPP technical specification 36.413 V11.2.0. In this way, battery power and network resources are saved when the mobile communication terminal is inactive.

The prior art documents EP 2 458 922 A1 and US 2012/051289 A1 disclose such mobile communication terminals.

However, in some situations, this leads to the mobile communication terminal going to an idle mode, even when communication downlink (to the mobile communication terminal) or uplink (from the mobile communication terminal) occurs soon after going into idle mode.

It would be greatly beneficial if there was a way to avoid at least some instances of setting the mobile communication terminal in idle mode when uplink or downlink communication occurs in the near future.

### SUMMARY

It is an object to provide a way for setting a mobile communication terminal in idle mode which reduces the risk of very soon afterwards having to set up communication again.

According to a first aspect, it is presented a method for setting a mobile communication terminal of a cellular communication network in an idle mode. The method is performed in a network node and comprises the steps of: starting a first inactivity timer; starting a second inactivity timer; performing a control signalling step for determining whether control signalling associated with the mobile communication terminal is detected; resetting the first inactivity timer only when control signalling associated with the mobile communication terminal is detected and not when payload data associated with the mobile communication terminal is detected; performing a payload data step for determining whether payload data associated with the mobile communication terminal is detected; resetting the second inactivity timer only when payload data associated with the mobile communication terminal is detected and not when control signalling associated with the mobile communication terminal is detected; and setting the mobile communication terminal in an idle mode only when both the first inactivity timer and the second inactivity timer have expired, wherein the idle mode is a Radio Resource Control Idle, RRC_IDLE, mode. The first inactivity timer and the second inactivity timer are started before the control signalling step and the payload data step are performed. By using a model where both inactivity timers have to expire for the mobile communication terminal to go be set to the idle mode, the risk of setting the mobile communication terminal in idle mode when control signalling still occurs is greatly reduced, increasing responsiveness and reducing resource requirements to set up a new connection. For example, this reduces paging load, risk of repeating SMS (Short Messaging Service) messages and failure during a positioning procedure, which may take a considerable amount of time.

The step of resetting the first inactivity timer may comprise resetting the first inactivity timer when control signalling between the mobile communication terminal and a second node distinct from the network node is detected. In other words, signalling not aimed for the network node can still be relevant and can cause the first inactivity timer to be reset.

In the step of setting the mobile communication terminal in an idle mode, the expiration times for the first inactivity timer and the second inactivity timer may differ. This gives full flexibility in terms of how long inactivity is accepted for control signalling and payload data, respectively.

In one embodiment, the content of the control signalling between the mobile communication terminal and the second node is not intended for the network node. Still, it is beneficial to allow such control signalling to trigger a reset of the first inactivity timer.

The step of setting the mobile communication terminal in an idle mode may comprise setting the mobile communication terminal in an RRC_IDLE mode.

The control signalling may comprise non-access stratum signalling.

The method may further comprise the step of: signalling values of the first inactivity timer and the second activity timer to a target node when handover to the target node occurs. In this way, the present state of the inactivity timers follows the mobile communication terminal to the target node when handover occurs, giving a more accurate state of the timers after a handover.

According to a second aspect, it is presented a network node arranged to set a mobile communication terminal of a cellular communication network in an idle mode. The network node comprises: a processor; and a computer program product storing instructions that, when executed by the processor, causes the network node to: start a first inactivity timer; start a second inactivity timer; perform a payload data step for determining whether payload data associated with the mobile communication terminal is detected; reset the second inactivity timer only when payload data associated with the mobile communication terminal is detected and not when control signalling associated with the mobile communication terminal is detected; and set the mobile communication terminal in an idle mode only when both the first inactivity timer and the second inactivity timer have expired, wherein the idle mode is a Radio Resource Control Idle, RRC_IDLE, mode. The first inactivity timer and the second inactivity timer are started before the control signalling step and the payload data step are performed.

The instructions to reset the first inactivity timer may comprise instructions to reset the first inactivity timer when control signalling between the mobile communication terminal and a second node distinct from the network node is detected.

The expiration times for the first inactivity timer and the second inactivity timer may differ.

The instructions to set the mobile communication terminal in an idle mode may comprise instructions to transmit a context release message.

In one embodiment, the content of the control signalling between the mobile communication terminal and the second node is not intended for the network node.

The control signalling may comprise non-access stratum signalling.

The instructions may further comprise instructions to: signal timer values of the first inactivity timer and the second activity timer to a target node when handover to the target node occurs.

The network node may be a radio base station.

The network node may be a mobility management entity node.

It is to be noted that any feature of the first aspect may, where appropriate, be applied to the second aspect and vice versa.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating a cellular communication network where embodiments presented herein can be applied;
Fig 2 is a state diagram illustrating various modes and transitions of the mobile communication terminal of Fig 1;

The instructions to set the mobile communication terminal in an idle mode may comprise instructions to transmit a context release message.

In one embodiment, the content of the control signalling between the mobile communication terminal and the second node is not intended for the network node.

The control signalling may comprise non-access stratum signalling.

The instructions may further comprise instructions to: signal timer values of the first inactivity timer and the second activity timer to a target node when handover to the target node occurs.

The network node may be a radio base station.

The network node may be a mobility management entity node.

It is to be noted that any feature of the first aspect may, where appropriate, be applied to the second aspect and vice versa.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:

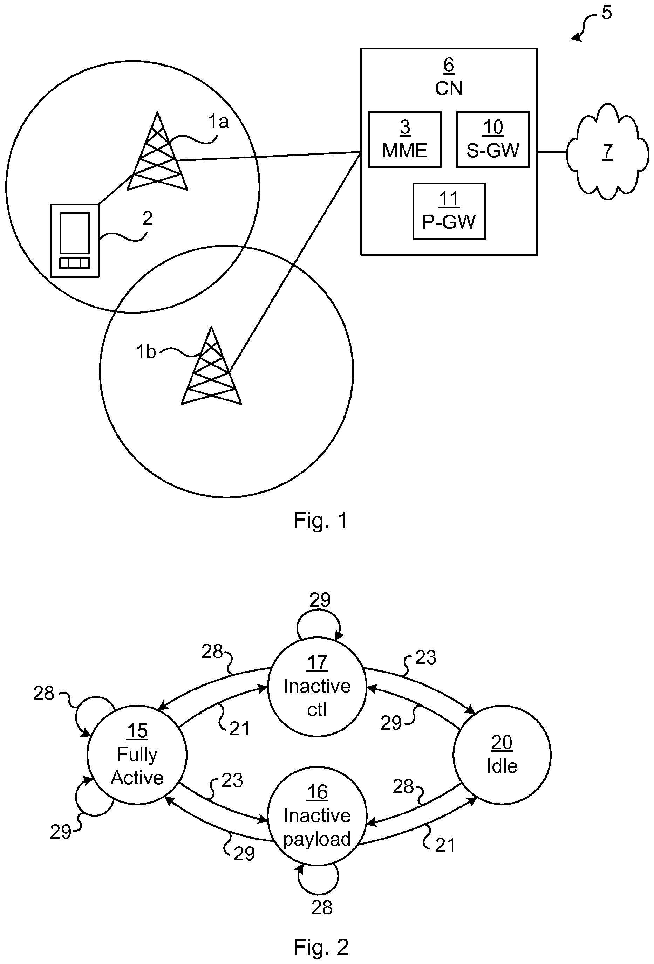

Fig 1 is a schematic diagram illustrating a cellular communication network where embodiments presented herein can be applied;
Fig 2 is a state diagram illustrating various modes and transitions of the mobile communication terminal of Fig 1;

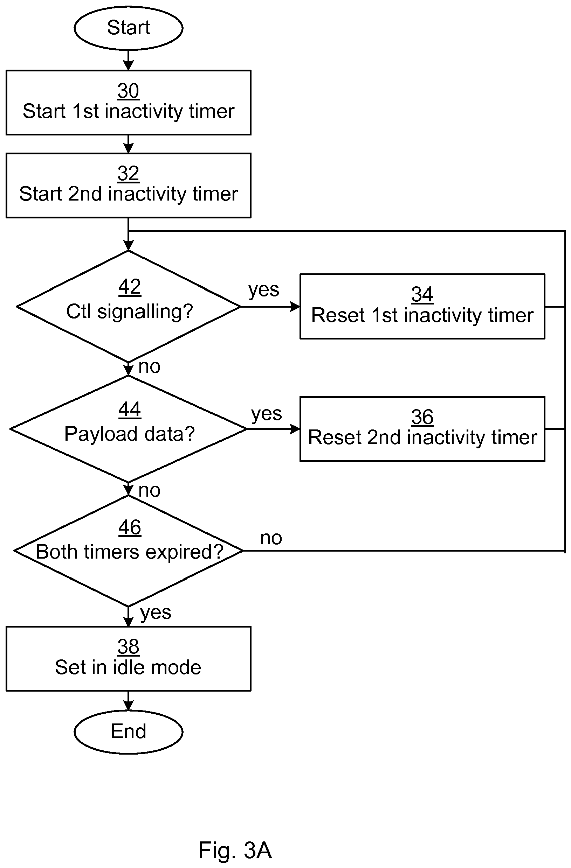

Figs 3A-B are flow charts illustrating methods executed in a network node of Fig 1 for setting a mobile communication terminal of a cellular communication network in an idle mode;

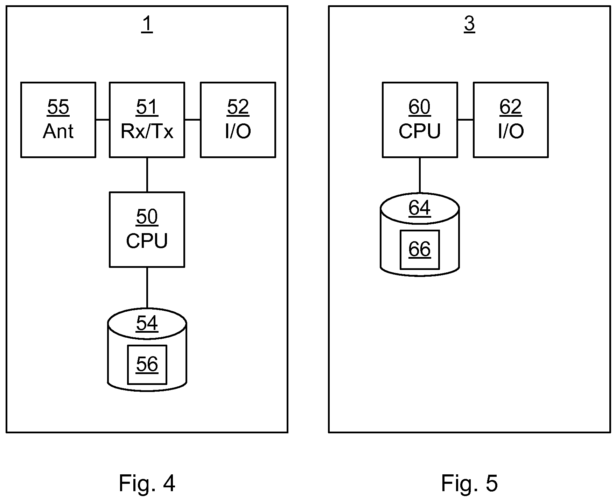

Fig 4 is a schematic diagram illustrating elements of any one of the radio base stations of Fig 1, here represented by a single radio base station; and
Fig 5 is a schematic diagram illustrating elements of any one of the MME of Fig 1.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

Fig 1 is a schematic diagram illustrating a cellular communication network 5 where embodiments presented herein can be applied.

The cellular communication network 5 can e.g. comply with any one or a combination of LTE (Long Term Evolution), W-CDMA (Wideband Code Division Multiplex), EDGE (Enhanced Data Rates for GSM Evolution, GPRS (General Packet Radio Service)), CDMA2000 (Code Division Multiple Access 2000), etc., or any future cellular communication network standard, as long as the principles described hereinafter are applicable.

The mobile communications system 5 comprises a core network 6 and one or more network nodes in the form of radio base stations 1a-b, such as evolved Node Bs 1, also known as eNode Bs or eNBs. The radio base stations 1a-b could also be in the form of Node Bs, BTSs (Base Transceiver Stations) and/or BSSs (Base Station Subsystems). Moreover, one or more of the radio base stations 1a-b could be a remote radio unit under control of a radio base station. In any case, each radio base station 1a-b provides radio connectivity to one or more mobile communication terminals 2. The term mobile communication terminal is also known as UE, mobile terminal, user terminal, user agent, etc. and can e.g. be embodied in a mobile telephone, a machine-to-machine device, a computer, a computer peripheral, etc.

The radio base stations 1a-b are also connected to the core network 6, via an S1 interface in an embodiment when the cellular communication system complies with LTE, for connectivity to central functions and other networks. For example, a Mobility Management Entity (MME) 3 is a network node being a control node for the access network, responsible for tasks such as idle mode tracking of the mobile communication terminals 2, paging, retransmission, bearer activation/deactivation, etc. A serving gateway 10 routes and forwards user data packets, i.e. payload data and one or more PDN (Packet Data Network) gateway 11 is responsible for connectivity to external packet networks 7, such as the Internet, including potential filtering and billing support.

While the cellular communication network 5 of Fig 1 shows two radio base stations 1a-b, the cellular communication network 5 can have any number of radio base stations and corresponding wireless radio interfaces and cells, supporting a suitable number of mobile communication terminals.

The communication between each mobile communication terminal 2 and the radio base stations 1a-b occurs over a wireless radio interface. Each radio base station 1a-b provides coverage using a corresponding cell. In this example, each radio base station 1a-b has a single associated cell. However, it is to be noted that each radio base station can have multiple associated cells and the number of associated cells can differ between radio base stations. In this example, the first radio base station 1a is the serving radio base station for the illustrated mobile communication terminal 2.

If the mobile communication terminal 2 moves out of the coverage area of the first radio base station 1a and into the coverage area of the second radio base station 1b, a handover is performed by the cellular communication network 5. In such a handover, in this example, the first radio base station 1a is the source node and the second radio base station 1b is the target node.

Fig 2 is a state diagram illustrating various modes of the mobile communication terminal 2 of Fig 1. Each mobile communication terminal 2 has its own instance of modes and transitions, which are managed by a network node, such as a serving radio base station or MME. The modes relate to two inactivity timers managed by the network node for the mobile communication terminal in question: an inactivity timer for control signalling and an inactivity timer for payload data, also known as user data or user plane data.

There are four modes in this model: a fully active mode 15, an inactive payload mode 16, an inactive control mode 17 and an idle mode 20.

In the fully active mode 15, the mobile communication terminal is in a mode of normal communication and neither of the inactivity timer for control signalling nor the inactivity timer for payload data have expired.

In the inactive control mode 17, the mobile communication terminal is still in a mode of normal communication. Here, however, the inactivity timer for control signalling has expired, while the inactivity timer for payload data has not expired.

In the inactive payload mode 16, the mobile communication terminal is still in a mode of normal communication. Here, however, the inactivity timer for payload data has expired, while the inactivity timer for control signalling has not expired.

In the idle mode 20, the mobile communication terminal is in an idle mode. For example, the idle mode can be an RRC_IDLE mode.

Having described the modes, the transitions between the modes will now be discussed.

From the fully active mode 15, if the inactivity timer for control signalling expires 21, there is a transition to the inactive control mode 17. Alternatively, from the fully active mode 15, if the inactivity timer for payload data expires 23, there is a transition to the inactive payload mode 16. If the network node detects 28 control signalling associated with the mobile communication terminal, the inactivity timer for control signalling is reset and the mobile communication terminal remains in the fully active mode 15. Analogously, if the network node detects 29 payload data associated with the mobile communication terminal (i.e. either to or from the mobile communication terminal), the inactivity timer for payload data is reset and the mobile communication terminal also remains in the fully active mode 15.

From the inactive control mode 17, if the inactivity timer for payload data expires 23, there is a transition to the idle mode 20. On the other hand, if the network node detects 28 control signalling associated with the mobile communication terminal, , the inactivity timer for control signalling is reset and there is a transition to the fully active mode 15. Analogously, if the network node detects 29 payload data associated with the mobile communication terminal (i.e. either to or from the mobile communication terminal), the inactivity timer for payload data is reset and the mobile communication terminal also remains in the inactive control mode 17.

From the inactive payload mode 16, if the inactivity timer for control signalling expires 21, there is a transition to the idle mode 20. On the other hand, if the network node detects 29 payload data associated with the mobile communication terminal, the inactivity timer for payload data is reset and there is a transition to the fully active mode 15. If the network node detects 28 control signalling associated with the mobile communication terminal, the inactivity timer for control signalling is reset and the mobile communication terminal remains in the inactive payload mode 15.

From the idle mode 20, if the network node detects 28 control signalling associated with the mobile communication terminal, the inactivity timer for control signalling is reset and there is a transition to the inactive payload mode 16. If the network node detects 29 payload data associated with the mobile communication terminal, the inactivity timer for payload data is reset and there is a transition to the inactive control mode 17.

The state diagram could be varied in many ways, but in any case, both inactivity timers expire to reach the idle mode 20. By using a model where both inactivity timers have to expire for the mobile communication terminal to go in to idle mode 20, the risk of setting the mobile communication terminal in idle mode when control signalling still occurs is greatly reduced. For example, this reduces paging load, risk of repeating SMS (Short Messaging Service) messages and failure during a positioning procedure, which may take a considerable amount of time.

Figs 3A-B are flow charts illustrating methods executed in a network node of Fig 1 for setting a mobile communication terminal of a cellular communication network in an idle mode. The methods correspond to the state diagram of Fig 2. Firstly, the method illustrated by the flow chart of Fig 3A will be described.

In a *start 1^{st} inactivity timer* step 30, a first inactivity timer is started. The first inactivity timer is the same as the control signalling timer described above with reference to Fig 2. The first inactivity timer can be implemented in any suitable way which allows it to be determined when it has expired and also has an ability to be reset. For example, the first inactivity timer can be set to an initial value and the first inactivity timer can decrease over time and expire when it reaches zero. In another example the first inactivity timer is initially set to zero and it increases over time until it reaches an expiration value.

In a *start 2^{nd} inactivity timer* step 32, a second inactivity timer is started. The second inactivity timer is the same as the payload data timer described above with reference to Fig 2. As for the first inactivity timer, the second inactivity timer can be implemented in any suitable way which allows it to be determined when it has expired and also has an ability to be reset. For example, the second inactivity timer can be set to an initial value and the second inactivity timer can decrease over time and expire when it reaches zero. In another example the second inactivity timer is initially set to zero and it increases over time until it reaches an expiration value.

In a conditional *control signalling* step 42, it is determined whether control signalling associated with the mobile communication terminal, is detected. This second node can be any node in the network, such as an MME, an S-GW, a P-GW, a radio base station, etc., as long as it is not the network node performing the method. If this is the case, the method continues to a *reset 1^{st} inactivity timer* step 34. Otherwise, the method continues to a conditional *payload data* step 44.

Optionally, the control signalling is between the mobile communication terminal and a second node distinct from the network node. In this case, the content of the control signalling between the mobile communication terminal and the second node is typically not intended for the network node executing the method. For example, the control signalling can comprise non-access stratum signalling. Optionally, the conditional *control signalling* step 42 is only responsive to non-access stratum signalling. Non-access stratum signalling is signalling not directly related to the radio access network. In this way, when the network node is a radio base station, the network node resets the timer, even when it is not concerned with the content of the signalling; the network node can however see that there is signalling to or from the mobile communication terminal in question and resets the first inactivity timer in response to this, presumably, control signalling.

In another embodiment, the control signalling is intended for the network node, e.g. when the control signalling is used for the purpose of services utilizing the control plane as a bearer, such as for positioning based on LPPa (LTE Positioning Protocol A). In the example of LPPa, the LPPa signalling originates from a positioning node and is relayed by the MME to the radio base station. This can trigger the radio base station to either perform an internal execution (e.g. retrieving a measurement) or to start a signalling procedure towards the mobile communication terminal. In the latter case it means that the control signalling from the mobile communication terminal is intended for the radio base station, although the radio base station in its turn will use the signalling to trigger response signalling towards the MME (and further on to the positioning node). This control signalling between the mobile communication terminal and the radio base station cases a reset of the first inactivity timer.

In the *reset 1^{st} inactivity timer* step 34, the first inactivity timer is reset. After this step, the method returns to the conditional *control signalling* step 42.

In the conditional *payload data step* 44, it is determined whether payload data associated with the mobile communication terminal is detected. If this is the case, the method continues to a *reset 2^{nd} inactivity timer* step 36. Otherwise, the method continues to a conditional *both timers expired* step 46.

In the *reset 2^{nd} inactivity timer* step 36, the second inactivity timer is reset. After this step, the method returns to the conditional *control signalling* step 42.

In the conditional *both timers expired* step 46, it is determined whether both the first inactivity timer and the second inactivity timer have expired. If this is the case, the method continues to a *set in idle mode* step 38. Otherwise, the method returns to the conditional *control signalling* step 42. In other words, as a response to both inactivity timers having expired, the method continues to the *set in idle mode* step 38.

The expiration times for the first inactivity timer and the second inactivity timer can be the same or they can differ. This gives full flexibility in terms of how long inactivity is accepted for control signalling and payload data, respectively.

In the *set in idle mode* step 38, the mobile communication terminal is set in an idle mode, e.g. an RRC_IDLE mode. This can e.g. be performed by an UE Context Release procedure, in the example of LTE. The UE Context Release procedure is triggered either by the radio base station or the MME.

When the procedure is triggered by the MME, a UE CONTEXT RELEASE COMMAND message is sent over S1 to the radio base station. The radio base station sends an RRC CONNECTION RELEASE message using RRC (Radio Resource Control) to the mobile communication terminal and then clears all resources related to the mobile communication terminal. The radio base station ends the procedure by sending the UE CONTEXT RELEASE COMPLETE message back to the MME

When the procedure in triggered by the radio base station, a UE CONTEXT RELEASE REQUEST message is sent over S1 to the MME. The rest of the procedure is identical to an MME triggered release.

It is to be noted that the order of the conditional *control signalling* step 42 and the conditional *payload data* step 44 is not important. Also, the order of the *start 1^{st} inactivity timer* step 30 and *start 2^{nd} inactivity timer* step 32 is not important.

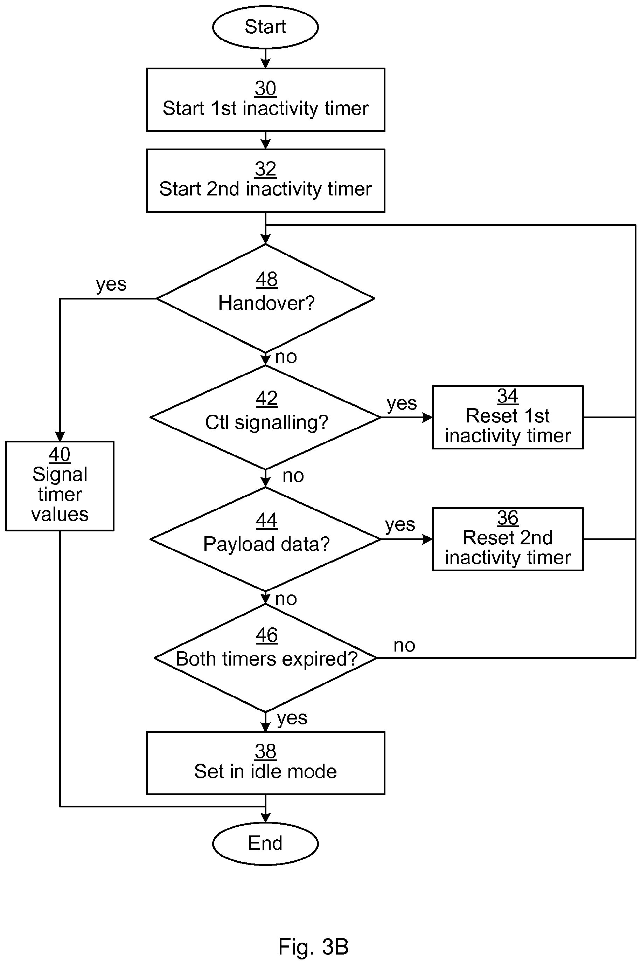

The method illustrated by the flow chart of Fig 3B will now be described. The steps of Fig 3A have equivalent steps in Fig 3B and will not be explained again unless they differ in any way.

In this method, there is a conditional *handover* step 48 after the *start second inactivity timer* step 32. In the conditional *handover* step 48, it is determined whether it has been decided to hand over the mobile communication terminal from a source node to a target node. If this is the case, the method continues to a *signal timer values* step 40. Otherwise, the method continues to the conditional *control signalling* step 42.

In the *signal timer values* step 40, the values of the first inactivity timer and the second inactivity timer are signalled to the target node. This allows the present state of the inactivity timers to follow the mobile communication terminal when handover occurs. After the *signal timer values* step 40.

It is to be noted that the conditional *handover* step 48 can be positioned anywhere in the flow chart between the start second inactivity timer and the conditional *both timers expired* step 46.

Fig 4 is a schematic diagram illustrating elements of any one of the radio base stations of Fig 1, here represented by a single radio base station 1. A processor 50 is provided using any combination of one or more of a suitable central processing unit (CPU), multiprocessor, microcontroller, digital signal processor (DSP), application specific integrated circuit etc., capable of executing software instructions 56 stored in a computer program product 54, e.g. in the form of a memory. The processor 50 can be configured to execute the method described with reference to Figs 3A-B above.

The computer program product 54 can be a memory being any combination of read and write memory (RAM) and read only memory (ROM). The memory also comprises persistent storage, which, for example, can be any single one or combination of solid state memory, magnetic memory, or optical memory.

The radio base station 1 further comprises an I/O interface 52 e.g. for communicating the core network (e.g. over S1) and/or other radio base stations (e.g. over X2), for instance during handover.

The radio base station 1 also comprises one or more transceivers 51, comprising analogue and digital components, and a suitable number of antennas 55 for radio communication with mobile communication terminals. The processor 50 controls the general operation of the radio base station 1, e.g. by sending control signals to the transceiver 51 and receiving reports from the transceiver 51 of its operation.

Other components of the radio base station 1 are omitted in order not to obscure the concepts presented herein.

Fig 5 is a schematic diagram illustrating elements of the MME 3 of Fig 1. A processor 60 is provided using any combination of one or more of a suitable central processing unit (CPU), multiprocessor, microcontroller, digital signal processor (DSP), application specific integrated circuit etc., capable of executing software instructions 66 stored in a computer program product 64, e.g. in the form of a memory. The processor 60 can be configured to execute the method described with reference to Figs 3A-B above.

The computer program product 64 can be a memory being any combination of read and write memory (RAM) and read only memory (ROM). The memory also comprises persistent storage, which, for example, can be any single one or combination of solid state memory, magnetic memory, or optical memory.

The MME 3 further comprises an I/O interface 62 e.g. for communicating other components of the core network and/or radio base stations (e.g. over S1).

Other components of the MME 3 are omitted in order not to obscure the concepts presented herein.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for setting a mobile communication terminal (2) of a cellular communication network (5) in an idle mode, the method being performed in a network node (1, 3) and comprising the steps of:
starting (30) a first inactivity timer;
starting (32) a second inactivity timer;
performing a control signalling step (42) for determining whether control signalling associated with the mobile communication terminal is detected;
resetting (34) the first inactivity timer only when control signalling associated with the mobile communication terminal is detected and not when payload data associated with the mobile communication terminal is detected;
performing a payload data step (44) for determining whether payload data associated with the mobile communication terminal is detected;
resetting (36) the second inactivity timer only when payload data associated with the mobile communication terminal is detected and not when control signalling associated with the mobile communication terminal is detected; and
setting (38) the mobile communication terminal in an idle mode only when both the first inactivity timer and the second inactivity timer have expired, wherein the idle mode is a Radio Resource Control Idle, RRC_IDLE, mode,
wherein the first inactivity timer and the second inactivity timer are started (30, 32) before the control signalling step (42) and the payload data step (44) are performed.

2. The method according to claim 1, wherein the step of resetting (34) the first inactivity timer comprises resetting the first inactivity timer when control signalling between the mobile communication terminal and a second node distinct from the network node is detected.

3. The method according to claim 1 or 2, wherein in the step of setting (38) the mobile communication terminal (2) in an idle mode, the expiration times for the first inactivity timer and the second inactivity timer differ.

4. The method according to any one of the preceding claims, wherein the content of the control signalling between the mobile communication terminal and the second node is not intended for the network node.

5. The method according to any one of the preceding claims, wherein the control signalling comprises non-access stratum signalling.

6. The method according to any one of the preceding claims, further comprising the step of:
signalling (40) values of the first inactivity timer and the second activity timer to a target node when handover to the target node occurs.

7. A network node (1, 3) arranged to set a mobile communication terminal (2) of a cellular communication network in an idle mode, the network node comprising:
a processor (50); and
a computer program product (54) storing instructions (56) that, when executed by the processor, causes the network node to:
start a first inactivity timer;
start a second inactivity timer;
perform a control signalling step for determining whether control signalling associated with the mobile communication terminal is detected;
reset the first inactivity timer only when control signalling associated with the mobile communication terminal is detected and not when control signalling associated with the mobile communication terminal is detected;
perform a payload data step for determining whether payload data associated with the mobile communication terminal is detected;
reset the second inactivity timer only when payload data associated with the mobile communication terminal is detected and not when control signalling associated with the mobile communication terminal is detected; and
set the mobile communication terminal in an idle mode only when both the first inactivity timer and the second inactivity timer have expired, wherein the idle mode is a Radio Resource Control Idle, RRC_IDLE, mode,
wherein the first inactivity timer and the second inactivity timer are started before the control signalling step and the payload data step are performed.

8. The network node to claim 7, wherein the instructions to reset the first inactivity timer comprise instructions to reset the first inactivity timer when control signalling between the mobile communication terminal and a second node distinct from the network node is detected.

9. The network node (1, 3) according to claim 7 or 8, wherein the expiration times for the first inactivity timer and the second inactivity timer differ.

10. The network node (1, 3) according to any one of claims 7 to 9, wherein the instructions to set the mobile communication terminal in an idle mode comprise instructions to transmit a context release message.

11. The network node (1, 3) according to any one of claims 7 to 10, wherein the content of the control signalling between the mobile communication terminal and the second node is not intended for the network node.

12. The network node (1, 3) according to any one of claims 7 to 11, wherein the instructions further comprise instructions to:
signal timer values of the first inactivity timer and the second activity timer to a target node when handover to the target node occurs.

13. The network node (1) according to any one of claims 7 to 12, wherein the network node is a radio base station (1).

14. The network node (1) according to any one of claims 7 to 12, wherein the network node is a mobility management entity node (3).

## Patentansprüche

1. Verfahren zum Versetzen eines mobilen Kommunikationsendgeräts (2) von einem zellularen Kommunikationsnetz (5) in einen Ruhemodus, wobei das Verfahren in einem Netzknoten (1, 3) durchgeführt wird und die Schritte umfasst:
Starten (30) eines ersten Inaktivitätszeitgebers;
Starten (32) eines zweiten Inaktivitätszeitgebers;
Durchführen eines Steuersignalisierungsschritts (42) zum Bestimmen, ob eine Steuersignalisierung, die dem mobilen Kommunikationsendgerät zugeordnet ist, erkannt wird;
Zurücksetzen (34) des ersten Inaktivitätszeitgebers nur dann,
wenn eine dem mobilen Kommunikationsendgerät zugeordnete Steuersignalisierung erkannt wird und nicht, wenn Nutzdaten, die dem mobilen Kommunikationsendgerät zugeordnet sind, erkannt werden;
Durchführen eines Nutzdatenschritts (44) zum Bestimmen, ob Nutzdaten, die dem mobilen Kommunikationsendgerät zugeordnet sind, erkannt werden;
Zurücksetzen (36) des zweiten Inaktivitätszeitgebers nur dann, wenn Nutzdaten, die dem mobilen Kommunikationsendgerät zugeordnet sind, erkannt werden, und nicht, wenn Steuersignalisierung, die dem mobilen Kommunikationsendgerät zugeordnet ist, erkannt wird; und
Versetzen (38) des mobile Kommunikationsendgerät in einen Ruhemodus nur dann, wenn sowohl der erste Inaktivitätszeitgeber als auch der zweite Inaktivitätszeitgeber abgelaufen ist, wobei der Ruhemodus ein Radio Resource Control Idle-Modus, RRC_IDLE-Modus, ist,
wobei der erste Inaktivitätszeitgeber und der zweite Inaktivitätszeitgeber gestartet (30, 32) werden, bevor der Steuersignalisierungsschritt (42) und der Nutzdatenschritt (44) durchgeführt werden.

2. Verfahren nach Anspruch 1, wobei der Schritt des Zurücksetzens (34) des ersten Inaktivitätszeitgebers ein Zurücksetzen des ersten Inaktivitätszeitgeber umfasst, wenn die Steuersignalisierung zwischen dem mobilen Kommunikationsendgerät und einem zweiten Knoten, der von dem Netzknoten verschieden ist, erkannt wird.

3. Verfahren nach Anspruch 1 oder 2, wobei in dem Schritt des Versetzens (38) des mobilen Kommunikationsendgeräts (2) in einen Ruhemodus die Ablaufzeiten für den ersten Inaktivitätszeitgeber und den zweiten Inaktivitätszeitgeber unterschiedlich sind.

4. Verfahren nach einem der vorstehenden Ansprüche, wobei der Inhalt der Steuersignalisierung zwischen dem mobilen Kommunikationsendgerät und dem zweiten Knoten nicht für den Netzknoten bestimmt ist.

5. Verfahren nach einem der vorstehenden Ansprüche, wobei das Steuersignalisieren "Non-access Stratum"-Signalisieren umfasst.

6. Verfahren nach einem der vorstehenden Ansprüche, das ferner den Schritt umfasst:
Signalisieren (40) von Werten des ersten Inaktivitätszeitgebers und des zweiten Aktivitätszeitgebers an einen Zielknoten, wenn eine Übergabe an den Zielknoten auftritt.

7. Netzknoten (1, 3), eingerichtet zum Versetzen eines mobilen Kommunikationsendgeräts (2) eines zellularen Kommunikationsnetzes in einen Ruhemodus, wobei der Netzknoten umfasst:
einen Prozessor (50); und
ein Computerprogrammprodukt (54), das Anweisungen (56) speichert, die, wenn sie vom Prozessor ausgeführt werden, den Netzknoten veranlassen zum:
Starten eines ersten Inaktivitätszeitgebers;
Starten eines zweiten Inaktivitätszeitgebers;
Durchführen eines Steuersignalisierungsschritts zum Bestimmen, ob eine Steuersignalisierung, die dem mobilen Kommunikationsendgerät zugeordnet ist, erkannt wird;
Zurücksetzen des ersten Inaktivitätszeitgebers nur dann, wenn eine Steuersignalisierung, die dem mobilen Kommunikationsendgerät zugeordnet ist, erkannt wird, und nicht, wenn eine Steuersignalisierung, die dem mobilen Kommunikationsendgerät zugeordnet ist, erkannt wird;
Durchführen eines Nutzdatenschritts zum Bestimmen, ob Nutzdaten, die dem mobilen Kommunikationsendgerät zugeordnet sind, erkannt werden;
Zurücksetzen des zweiten Inaktivitätszeitgebers nur dann, wenn Nutzdaten, die dem mobilen Kommunikationsendgerät zugeordnet sind, erkannt werden, und nicht, wenn eine Steuersignalisierung, die dem mobilen Kommunikationsendgerät zugeordnet ist, erkannt wird;
und
Versetzen des mobilen Kommunikationsendgeräts in einen Ruhemodus nur dann, wenn sowohl der erste Inaktivitätszeitgeber als auch der zweite Inaktivitätszeitgeber abgelaufen ist, wobei der Ruhemodus ein Radio Resource Control Idle-Modus, RRC_IDLE-Modus ist,
wobei der erste Inaktivitätszeitgeber und der zweite Inaktivitätszeitgeber gestartet werden, bevor der Steuersignalisierungsschritt und der Nutzdatenschritt durchgeführt werden.

8. Netzknoten nach Anspruch 7, wobei die Anweisungen zum Zurücksetzen des ersten Inaktivitätszeitgebers Anweisungen zum Zurücksetzen des ersten Inaktivitätszeitgebers umfassen, wenn eine Steuersignalisierung zwischen dem mobilen Kommunikationsendgerät und einem zweiten Knoten, der von dem Netzknoten verschieden ist, erkannt wird.

9. Netzknoten (1, 3) nach Anspruch 7 oder 8, wobei die Ablaufzeiten für den ersten Inaktivitätszeitgeber und den zweiten Inaktivitätszeitgeber unterschiedlich sind.

10. Netzknoten (1, 3) nach einem der Ansprüche 7 bis 9, wobei die Anweisungen, das mobile Kommunikationsendgerät in einen Ruhemodus zu versetzen, Anweisungen zum Übertragen einer Kontextfreigabenachricht umfassen.

11. Netzknoten (1, 3) nach einem der Ansprüche 7 bis 10, wobei der Inhalt der Steuersignalisierung zwischen dem mobilen Kommunikationsendgerät und dem zweiten Knoten nicht für den Netzknoten bestimmt ist.

12. Netzknoten (1, 3) nach einem der Ansprüche 7 bis 11, wobei die Anweisungen ferner Anweisungen umfassen zum:
Signalisieren von Zeitgeberwerten des ersten Inaktivitätszeitgebers und des zweiten Aktivitätszeitgebers an einen Zielknoten, wenn eine Übergabe an den Zielknoten auftritt.

13. Netzknoten (1) nach einem der Ansprüche 7 bis 12, wobei der Netzknoten eine Funkbasisstation (1) ist.

14. Netzknoten (1) nach einem der Ansprüche 7 bis 12, wobei der Netznoten ein Mobilitätsmanagementeinheitenknoten (3) ist.

## Revendications

1. Procédé pour régler un terminal de communication mobile (2) d'un réseau de communication cellulaire (5) dans un mode inactif, le procédé étant mis en œuvre dans un nœud de réseau (1, 3) et comprenant les étapes consistant à :
démarrer (30) un premier temporisateur d'inactivité ;
démarrer (32) un deuxième temporisateur d'inactivité ;
mettre en œuvre une étape de signalisation de commande (42) pour déterminer si une signalisation de commande associée au terminal de communication mobile est détectée ;
réinitialiser (34) le premier temporisateur d'inactivité uniquement lorsqu'une signalisation de commande associée au terminal de communication mobile est détectée et non lorsque des données utiles associées au terminal de communication mobile sont détectées ;
mettre en œuvre une étape de données utiles (44) pour déterminer si des données utiles associées au terminal de communication mobile sont détectées ;
réinitialiser (36) le deuxième temporisateur d'inactivité uniquement lorsque des données utiles associées au terminal de communication mobile sont détectées et non lorsqu'une signalisation de commande associée au terminal de communication mobile est détectée ; et
régler (38) le terminal de communication mobile dans un mode inactif uniquement lorsque tant le premier temporisateur d'inactivité que le deuxième temporisateur d'inactivité ont expiré, dans lequel le mode inactif est un mode inactif de commande de ressource radio, RRC_IDLE,
dans lequel le premier temporisateur d'inactivité et le deuxième temporisateur d'inactivité sont démarrés (30, 32) avant que l'étape de signalisation de commande (42) et l'étape de données utiles (44) ne soient mises en œuvre.

2. Procédé selon la revendication 1, dans lequel l'étape de réinitialisation (34) du premier temporisateur d'inactivité comprend la réinitialisation du premier temporisateur d'inactivité lorsqu'une signalisation de commande entre le terminal de communication mobile et un deuxième nœud distinct du nœud de réseau est détectée.

3. Procédé selon la revendication 1 ou 2, dans lequel dans l'étape de réglage (38) du terminal de communication mobile (2) dans un mode inactif, les moments d'expiration pour le premier temporisateur d'inactivité et le deuxième temporisateur d'inactivité diffèrent.

4. Procédé selon l'une quelconque des revendications précédentes, dans lequel le contenu de la signalisation de commande entre le terminal de communication mobile et le deuxième nœud n'est pas prévu pour le nœud de réseau.

5. Procédé selon l'une quelconque des revendications précédentes, dans lequel la signalisation de commande comprend une signalisation de strate de non-accès.

6. Procédé selon l'une quelconque des revendications précédentes, comprenant en outre l'étape consistant à :
signaler (40) des valeurs du premier temporisateur d'inactivité et du deuxième temporisateur d'activité à un nœud cible lorsqu'un transfert vers le nœud cible se produit.

7. Nœud de réseau (1, 3) agencé pour régler un terminal de communication mobile (2) d'un réseau de communication cellulaire dans un mode inactif, le nœud de réseau comprenant :
un processeur (50) ; et
un produit programme informatique (54) stockant des instructions (56) qui, lorsqu'elles sont exécutées par le processeur, amènent le nœud de réseau à :
démarrer un premier temporisateur d'inactivité ;
démarrer un deuxième temporisateur d'inactivité ;
mettre en œuvre une étape de signalisation de commande pour déterminer si une signalisation de commande associée au terminal de communication mobile est détectée ;
réinitialiser le premier temporisateur d'inactivité uniquement lorsqu'une signalisation de commande associée au terminal de communication mobile est détectée et non lorsqu'une signalisation de commande associée au terminal de communication mobile est détectée ;
mettre en œuvre une étape de données utiles pour déterminer si des données utiles associées au terminal de communication mobile sont détectées ;
réinitialiser le deuxième temporisateur d'inactivité uniquement lorsque des données utiles associées au terminal de communication mobile sont détectées et non lorsqu'une signalisation de commande associée au terminal de communication mobile est détectée ;
et
régler le terminal de communication mobile dans un mode inactif uniquement lorsque tant le premier temporisateur d'inactivité que le deuxième temporisateur d'inactivité ont expiré, dans lequel le mode inactif est un mode inactif de commande de ressource radio, RRC_IDLE,
dans lequel le premier temporisateur d'inactivité et le deuxième temporisateur d'inactivité sont démarrés avant que l'étape de signalisation de commande et l'étape de données utiles ne soient mises en œuvre.

8. Nœud de réseau selon la revendication 7, dans lequel les instructions pour réinitialiser le premier temporisateur d'inactivité comprennent des instructions pour réinitialiser le premier temporisateur d'inactivité lorsqu'une signalisation de commande entre le terminal de communication mobile et un deuxième nœud distinct du nœud de réseau est détectée.

9. Nœud de réseau (1, 3) selon la revendication 7 ou 8, dans lequel les moments d'expiration pour le premier temporisateur d'inactivité et le deuxième temporisateur d'inactivité diffèrent.

10. Nœud de réseau (1, 3) selon l'une quelconque des revendications 7 à 9, dans lequel les instructions pour régler le terminal de communication mobile dans un mode inactif comprennent des instructions pour transmettre un message de libération de contexte.

11. Nœud de réseau (1, 3) selon l'une quelconque des revendications 7 à 10, dans lequel le contenu de la signalisation de commande entre le terminal de communication mobile et le deuxième nœud n'est pas prévu pour le nœud de réseau.

12. Nœud de réseau (1, 3) selon l'une quelconque des revendications 7 à 11, dans lequel les instructions comprennent en outre des instructions pour :
signaler des valeurs de temporisateur du premier temporisateur d'inactivité et du deuxième temporisateur d'activité à un nœud cible lorsqu'un transfert vers le nœud cible se produit.

13. Nœud de réseau (1) selon l'une quelconque des revendications 7 à 12, dans lequel le nœud de réseau est une station de base radio (1).

14. Nœud de réseau (1) selon l'une quelconque des revendications 7 à 12, dans lequel le nœud de réseau est un nœud d'entité de gestion de mobilité (3).
